# EUROPEAN PATENT SPECIFICATION

(11) **EP 2 659 103 B1**
(45) Date of publication and mention of the grant of the patent: **13.03.2019**
(21) Application number: 11791341.8
(22) Date of filing: 14.09.2011
(51) Int. Cl.: F02B 19/10, F02B 25/14, F02B 25/12

(54) **TWO-STROKE INTERNAL COMBUSTION ENGINE**
ZWEITAKTVERBRENNUNGSMOTOR
MOTEUR À COMBUSTION INTERNE À DEUX TEMPS

(30) Priority: 30.12.2010 IN 4026CH2010
(43) Date of publication of application: 06.11.2013
(73) Proprietor: TVS Motor Company Limited, Chennai 600 006 (IN); Indian Institute Of Science, Bangalore 560012 (IN)
(72) Inventor: NARASIMHAN, Melkote Viraraghavachar, Bangalore 560012 (IN); LAKSHMINARASIMHAN, Varadha Iyengar, Chennai 600006 (IN); KUMAR, D Nagendra, Chennai 600006 (IN); YALAMURU, Ramachandra Babu, Chennai 600006 (IN)
(74) Representative: Cabinet Plasseraud
(86) International application number: PCT/IN2011/000635
(87) International publication number: WO 2012/090216

(56) References cited:
- WO-A1-88/01339
- DE-A1- 4 102 037
- FR-A1- 2 244 912

## Description

### TECHNICAL FIELD

The subject matter as described herein, in general, relates to engines and, in particular, to a two-stroke internal combustion (IC) engine.

### BACKGROUND

Conventionally, internal combustion (IC) engines find use in industrial, transport, and marine applications. The IC engines may be classified based on the number of power strokes per working cycle of the IC engine. For example, IC engines are classified as two stroke engines or four stroke engines. The two stroke engines complete various phases of the working cycle, i.e., intake, compression, combustion and expansion, and exhaust, in two strokes of a piston between its extreme positions. The various phases of the working cycle are accomplished in two strokes of the piston by performing the intake and exhaust stroked simultaneously during the end of the expansion and the beginning of the compression strokes. Owing to a power stroke for every two strokes of the piston in contrast to a power stroke for every four strokes in the case of the four stroke engines, such engines have an inherent advantage of high power-to-weight ratio as compared to the four stroke engines. An example of such an engine is shown in FR-2244912.

To achieve the intake of charge during the intake stroke and to expel the combustion product during the exhaust stroke, the conventional two stroke engines are usually provided with ports in a cylinder wall. Due to layout of the ports in the cylinder wall and the simultaneous intake and exhaust strokes, a mixing of the charge and the combustion products occurs in the cylinder bore, Further, because of the overlapping intake and exhaust strokes, some amount of the charge may leak cut from the cylinder bore during the exhaust stroke.

### SUMMARY

The subject matter described herein relates to a two stroke internal combustion (IC) engine. The two stroke IC engine comprises a cylinder head having an auxiliary combustion chamber to achieve at least partial combustion of a charge, and an inlet valve to regulate the induction of the charge into the auxiliary combustion chamber. The two stroke IC engine further includes a fuel supply pump in fluid communication with the auxiliary combustion chamber to induct the charge into the auxiliary combustion chamber.

These and other features, aspects, and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### BRIEF DESCRIPTION OF DRAWINGS

The above and other features, aspects, and advantages of the subject matter will be better understood with regard tc the following description, appended claims, and accompanying drawings where:
**Fig. 1** illustrates a sectional view of a two stroke IC engine, according to an embodiment of the present subject matter.
**Fig. 2a** and **2b** illustrate sectional views of a fuel supply pump of the two stroke IC engine, according to an embodiment of the present subject matter.
**Fig. 3** illustrates a chain drive assembly of the two stroke IC engine, according to an embodiment of the present subject matter.

### DETAILED DESCRIPTION

Conventional two stroke engines have overlapping intake and exhaust strokes and are provided with ports in a cylinder wall for intake of charge and for expulsion of the products of combustion of charge from a cylinder bore. Due to their design and operation, certain features, such as incomplete combustion of charge and leakage of charge, are associated with these engines. Leakage of charge occurs due to short circuiting when some of the charge is expelled along with the exhaust gases during scavenging and results in high unburnt fuel in exhaust emissions and low fuel economy. The incomplete combustion of charge is attributed to dilution of charge because of ineffective scavenging of the combustion products. These features may adversely affect the performance of the two stroke engines in terms of the output power and the fuel economy.

Conventionally, to overcome the effects of the short circuiting and the dilution of charge, the charge supplied into the combustion chamber of these engines is usually rich as compared to the stoichiometric composition. Further, the air and fuel is premixed to form charge in a crankcase of the two stroke engine, for example, a spark ignition two stroke engine, before being supplied for combustion. However, such premixing results in incomplete disintegration of the fuel component in the charge, which in turn may aggravate the incomplete combustion of the charge, thereby causing emission of unburnt fuel. As a result, such engines suffer from a low fuel economy and a high emission of pollutants

Further, with the provision of the ports in the cylinder wall for the expulsion of the combustion products, the ports and the cylinder wall undergo thermal loading and distortions during the discharge of the combustion products. The distortion of the cylinder wall may lead to high friction between the piston and the cylinder wall and seizure of the piston.

To this end, embodiments of a two stroke internal combustion engine are disclosed herein.

The two stroke internal combustion engine, interchangeably referred to as an engine hereinafter, includes a crankcase housing a crankshaft and having a cylinder block mounted thereon. A piston, which is operably coupled to the crankshaft, is moveably disposed in a cylinder bore of the cylinder block. A motion of the piston is transmitted to the crankshaft through a connecting rod. In the cylinder bore, the piston reciprocates between two extreme positions - a top dead centre position (TDC) and a bottom dead centre position (BDC). The piston completes the various strokes of the working cycle, i.e., intake, compression, combustion and expansion, and exhaust, two strokes of the piston; one stroke from the TDC to the BDC and the other stroke from the BDC to the TDC.

According to an embodiment of the present subject matter, the engine is provided with an auxiliary combustion chamber formed in the cylinder head of the engine. The auxiliary combustion chamber directly receives the charge, through an inlet port. The inlet port of the auxiliary combustion chamber is provided with an inlet valve to regulate opening and closing of the inlet port. The inlet valve is actuated by a valve train mechanism.

Further, the auxiliary combustion chamber is in fluid communication with a fuel supply pump through the inlet port. The fuel supply pump receives a mixture of air and fuel from a fuelling device, such as a carburettor, and pressurizes it sufficiently to atomize the fuel and mix it with the air to form the charge. The charge, hence obtained, includes a substantially homogenous mixture of air and fuel. The fuel supply pump then inducts the charge into the auxiliary combustion chamber through the inlet port. In one implementation, a substantially small quantity of rich charge, as compared to the stoichiometric composition, is inducted into the auxiliary combustion chamber.

The induction of charge into the auxiliary combustion chamber is achieved during an intake stroke of the piston, i.e., when the piston is moving from the BDC to the TDC and is substantially close to the TDC than to the BDC. Further, since the pressure in the auxiliary combustion chamber is not as high as the pressure in the main combustion chamber of a conventional engine, the fuel supply pump described in the present subject matter can be a low-pressure fuel supply pump. Such a pump has low wear and low maintenance, and a long life.

In an embodiment, an ignition element, for example, a spark plug, is provided in the auxiliary combustion chamber to effect ignition of the charge. In one embodiment, the ignition element facilitates a partial combustion, also referred to as a first combustion, of the charge in the auxiliary combustion chamber. A flame front of the expanding charge propagates from the auxiliary combustion chamber into a main combustion chamber of the engine. A substantially complete combustion, also referred to as a second combustion, of the charge is achieved in the main combustion chamber. In one implementation, the main combustion chamber receives a compressed scavenging medium, for example, air or a lean mixture of the charge, from the crankcase, at end of the compression stroke of the piston and this scavenging medium assists in the second combustion of the charge.

The scavenging medium in the main combustion chamber and the small quantity of rich charge supplied into the auxiliary combustion chamber by the fuel supply pump leads to the formation of layers of the charge of varying air fuel ratios inside the two combustion chambers, a phenomenon termed as stratification of the charge. The stratification of the charge inside the combustion chambers allows the engine to operate on an overall lean composition of the charge and, hence, reduces fuel consumption of the engine.

Further, according to an embodiment of the present subject matter, an exhaust port is provided in the cylinder head of the engine for the expulsion of the combustion products from the cylinder bore of the engine. The exhaust port has an exhaust valve to regulate the opening and closing of the exhaust valve. The provision of the exhaust valve in the cylinder head allows for a uniflow scavenging of the combustion products in the cylinder bore. Such scavenging facilitates in thorough purging of the cylinder bore and substantially prevents dilution of the charge due to the combustion products.

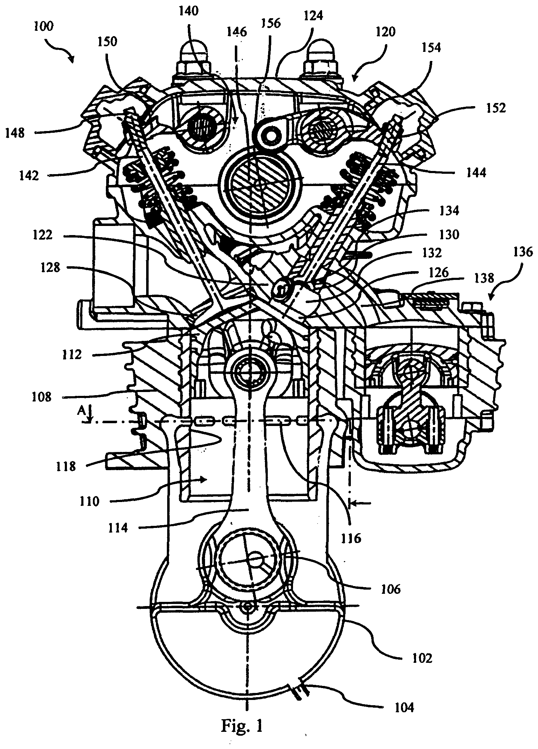

**Fig. 1** illustrates a sectional view of a two stroke internal combustion engine **100**, according to an embodiment of the present subject matter. The two stroke internal combustion engine **100**, referred to as an engine **100** hereinafter, includes a crankcase **102** connected to a charging device (not shown in figure) through an induction valve **104**, for example, a reed valve. According to an implementation, the induction valve **104** allows a unidirectional induction of a scavenging fluid, such as fresh air, into the crankcase **102**. In another example, the scavenging fluid may include a lean composition of charge formed by a mixture of air and fuel. The crankcase **102** houses a crankshaft **106**. Further, a cylinder block **108** having a cylinder bore **110** is mounted on the crankcase **102**. The cylinder bore **110** has a piston **112** disposed therein. It may be understood that the engine (**100**) may have more than one cylinder bore (**110**). Further, the piston **112** is connected to the crankshaft **106** through a connecting rod **114** and reciprocates inside the cylinder bore **110**.

Inside the cylinder bore **110**, the piston **112** has two extreme positions; a top dead centre (TDC) position when the piston **112** has completed a compression stroke and a bottom dead centre (BDC) position from where the piston **112** commences the compression stroke.

According to an embodiment of the present subject matter, the cylinder bore **110** has a plurality of transfer ports **116** provided annularly along a periphery of a cylinder wall **118**. The cylinder wall **118** is a wall of the cylinder block **108** that defines the cylinder bore **110** therein. In said embodiment, the transfer ports **116** are disposed in the cylinder wall **118** in such a way that the transfer ports **116** are closer to the BDC position than they are to the TDC position of the piston **112**. Through the transfer ports **116,** the scavenging fluid is inducted into the cylinder bore **110** from the crankcase **102** during movement of the piston **112** from the TDC position to the BDC position. Hence, the opening and closing of the transfer ports **116** is controlled by the movement of the piston **112**.

In said embodiment, a cylinder head assembly **120** is mounted on the cylinder block **108** to close one end of the cylinder bore **110**. The cylinder head assembly **120** includes a cylinder head **122** and a cylinder head cover **124**. A main combustion chamber **126** is formed between the cylinder head **122** and a crown of the piston **112** when the piston **112** is at the TDC position inside the cylinder bore **110** during a combustion cycle. In an embodiment, the cylinder head **122** has an exhaust port **128** for expelling combustion products from the main combustion chamber **126**. In other embodiments, the cylinder head **122** may have more than one exhaust port **128**.

Further, the cylinder head **122** includes an inlet port **130**. In an embodiment, the inlet port **130** is smaller than the exhaust port **128** in size. In said embodiment, the ratio of diameter of the exhaust port **128** to the diameter of the inlet port **130** lies in the range of about 2:1 to 4:1. Bigger size of the exhaust port **128** facilitates effective exhaust of the combustion products from exhaust port **128** as well as effective scavenging of the combustion products from the cylinder bore **110**. According to an embodiment, an auxiliary combustion chamber **132** is formed in the cylinder head **122** of the engine **100**. The auxiliary combustion chamber **132** is provided with an ignition element **134** to achieve combustion, for example, partial combustion, of the charge in the auxiliary combustion chamber **132**. In other embodiments, more than one ignition element **134** may be provided in the auxiliary combustion chamber **132** and the main combustion chamber **126** to facilitate the combustion of the charge.

The auxiliary combustion chamber **132** opens into the main combustion chamber **126** such that during the expansion stroke of the piston **112**, flame front produced by the combustion of charge in the auxiliary combustion chamber **132** spreads into the main combustion chamber **126** and the combustion of charge is substantially completed in the main combustion chamber **126**. In an embodiment, the auxiliary combustion chamber **132** includes about 70% of a total combustion chamber volume and the main combustion chamber **126** includes about 30% of the total combustion chamber volume.

During the movement of the piston **112** from the TDC to the BDC, at about the end of the expansion stroke, the transfer ports **116** are uncovered and the swirling scavenging medium scavenges the combustion products. Further, during the movement of the piston **112** from the BDC to the TDC, the scavenging medium is compressed in the cylinder bore **110**.

In addition, the auxiliary combustion chamber **132** is in fluid communication with a fuel supply pump **136** through an inlet passage **138**. The inlet passage **138** opens into the auxiliary combustion chamber **132** through the inlet port **130** provided at the auxiliary combustion chamber **132**. The fuel supply pump **136** inducts a pressurized charge of air and fuel for combustion into the auxiliary combustion chamber **132** through the inlet passage **128** and the inlet port **130**. In one embodiment, the inlet passage **138** is formed in the cylinder head **122** in substantial proximity of the combustion chambers **126** and **132**. In said embodiment, a substantially complete vaporization of the fuel in the pressurized charge is achieved in the inlet passage **138** because of the proximity to the combustion chambers **126** and **132**. In addition, the pressurization of charge facilitates atomization and disintegration of the charge before it is supplied to the engine **100** for combustion. Such pressurization assists in complete burning of the charge and hence improves the fuel economy of the engine **100**.

In said embodiment, the fuel supply pump **136** is housed in the cylinder block **108** of the engine **100** and obtains a drive from the crankshaft **106**. A phase difference may be provided between the drive of the crankshaft **106** and the drive of the fuel supply pump **136** so that the induction the charge into the auxiliary combustion chamber **132** is achieved substantially before the piston **112** reaches the TDC position. The fuel supply pump **136** may be integrated with other parts of the engine **100** as well, such as the crankcase **102** or the cylinder head **122**.

In an embodiment, the fuel supply pump **136** obtains the drive from the crankshaft **106** of the engine **100** through a chain drive assembly (not shown in the figure). In said embodiment, a crankshaft sprocket wheel (not shown in the figure) is mounted on an end of the crankshaft **106** to provide a drive to the fuel supply pump **136**.

In another embodiment, the fuel supply pump **136** may obtain the drive from the crankshaft **106** through a gear drive.

In operation, the fuel supply pump **136** inducts the charge into the auxiliary combustion chamber **132** when the piston **112** is compressing the air inducted in the main combustion chamber **126** through the transfer ports **116**. During this phase, the piston **112** is said to be in a compression stroke and is approaching the TDC position. Accordingly, during this phase, the main combustion chamber **126** has the scavenging fluid, such as fresh air or a lean composition of charge, while the auxiliary combustion chamber **132** has a small quantity of relatively rich composition of the charge as compared to that in the main combustion chamber **126,** thereby creating layers or strata of the charge with different compositions of air and fuel.

Due to such difference in the composition of charge in the combustion chambers **126** and **132,** a stratification of charge is achieved and a plurality of strata of charge is formed in the two combustion chambers **126** and **132.** The stratification of charge allows the engine **100** to operate on an overall lean composition of charge. Hence, the overall fuel consumption of the engine **100** is low.

In addition, the cylinder head assembly **120** includes a valve train assembly **140.** In one embodiment, the valve train assembly **140** is housed inside the cylinder head **122** and the cylinder head cover **124** of the cylinder head assembly **120.** In one embodiment, the valve train assembly **140** includes an exhaust valve **142** and an inlet valve **144.** In said embodiment, the exhaust valve **142** is provided at the exhaust port **128** in the cylinder head **122,** and the inlet valve **144** is provided at the inlet port **130.**

The exhaust valve **142** and the inlet valve **144** regulate the opening and closing of their respective ports, i.e., the exhaust port **128** and the inlet port **130,** at which they are provided. According to an embodiment, the valve train assembly **140** further includes a camshaft **146** to actuate the exhaust valve **142** and the inlet valve **144.**

The camshaft **146** may obtain a drive from the engine **100,** for example, through a chain drive. In such a case, a camshaft sprocket wheel (not shown in the figure) mounted on the camshaft **146** receives a drive from the crankshaft **106** through the crankshaft sprocket wheel and a chain (not shown in the figure). A phase difference may be provided between the drive of the crankshaft **106** and the drive of the camshaft **146** so that the opening of the inlet port **130** for the induction the charge into the auxiliary combustion chamber **132** is achieved substantially before the piston **112** reaches the TDC position. In one embodiment, the camshaft **146** may provide the drive to the fuel supply pump **136** through, for example, a chain drive.

In said embodiment, the exhaust valve **142** is operatively coupled to the camshaft **146** via a first push rod **148** and a first rocker arm **150** (partially shown in **Fig**. **1**). Similarly, the inlet valve **144** is operatively coupled to the camshaft **146** via a second push rod **152** and a second rocker arm **154**, respectively. In said embodiment, the exhaust valve **142** and the inlet valve **144** are spring loaded valves. In said embodiment, the camshaft **146** includes a plurality of cam lobes (not shown in the figure), corresponding to each of the exhaust valve **142** and the inlet valve **144**, to actuate the valves **142** and **144**.

Further, the first rocker arm **150** and the second rocker arm **154** include a first follower (not shown in **Fig. 1**) and a second follower **156**, respectively. In one embodiment, the first follower and the second follower **156** are roller type followers.

The operation of the inlet valve **144** is explained as follows. The second follower **156** is operably coupled to the corresponding tobe of the camshaft **146** for actuating the second rocker arm **154** and the second push rod **152**. The actuation causes the second push rod **152** to push the inlet valve **144**. As the inlet valve **144** is pushed, it is lifted of its seat in the cylinder head **122** to open the inlet port **130**. As the inlet port **130** is opened, the pressurized charge from the fuel supply pump **136** enters the auxiliary combustion chamber **132** through the inlet passage **138** and the inlet port **130**. As mentioned earlier, the combustion of charge is achieved in the auxiliary combustion chamber **132**. During the combustion in the auxiliary combustion chamber **132**, a substantial amount of lateral thrust due to a high pressure of the combustion products is borne by the inlet valve **144** and the auxiliary combustion chamber **132,** instead of the piston. Since, the piston **112** bears a small amount of the lateral thrust due to combustion, the vibrations and the noise of the engine **100** are low.

The operation of the exhaust valve **142** may be understood in a similar manner. The actuation of the first follower of the first rocker arm **150** by the corresponding lobe of the camshaft **146** causes the first push rod **148** to actuate the exhaust valve **142**. On such an actuation, the exhaust valve **142** is lifted off its seat in the cylinder head **122** to open the exhaust port **128**. The opening of the exhaust port **128** allows the expulsion of the combustion products from the cylinder bore **110**. The expulsion of the combustion products from the cylinder bore **110** is aided by the scavenging fluid entering the cylinder bore **110** through the transfer ports **116**. The provision of the exhaust port **128** in the cylinder head **122** of the engine **100** allows uniflow scavenging of the cylinder bore **110** by the scavenging fluid. Such a scavenging facilitates a thorough purging of the cylinder bore **110** and enhances fuel economy and efficiency of the engine **100**.

The provision of the exhaust port **128** and the exhaust valve **142** in the cylinder head **122** makes it possible to have a piston **112** of a relatively small skirt length. Since, the piston **112** of the engine **100** has a small skirt length, it has less area of contact with the wall of the cylinder bore **110**. The small skirt length, hence, facilitates to reduce friction between the piston **112** and the wall of the cylinder bore **110,** thus ensuring longevity and durability of the engine **100.** Further, the piston **112** with small skirt length has a small weight and therefore less inertia. Hence, the engine **100** expends less thrust of combustion in overcoming the inertia of the piston **112**.

In addition, the thermal loading and distortions due to the combustion products occur at the exhaust port **128** in the cylinder head **122**. This prevents the distortion and loading of the walls of the cylinder bore **110**, as in the case of conventional two stroke engines, and ensures durability of the engine **100**.

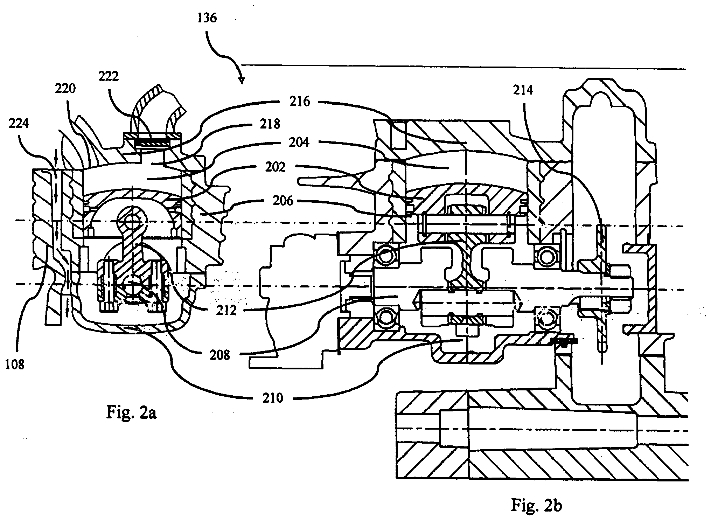

**Fig. 2a** and **Fig**. **2b** illustrate a front and a side sectional view, respectively, of the fuel supply pump **136** of the engine **100**, according to an embodiment of the present subject matter. In one embodiment, the fuel supply pump **136** is a reciprocating type pump and includes an auxiliary piston **202** reciprocating inside an auxiliary bore **204**. The auxiliary bore **204** is formed in an auxiliary cylinder block **206** of the fuel supply pump **136.** In an embodiment, the auxiliary cylinder block **206** is formed from the cylinder block **108** of the engine **100**, and hence the fuel supply pump **136** is integrated in the cylinder block **108**. In another embodiment, the fuel supply pump **136** is integrated in the crankcase **102** of the engine **100**. In yet another embodiment, the fuel supply pump **136** is integrated in the cylinder head **122** of the engine **100**.

The fuel supply pump **136** further includes an auxiliary crankshaft **208** housed in an auxiliary crankcase **210** of the fuel supply pump **136**. The piston **202** is operably coupled to the auxiliary crankshaft **208** through an auxiliary connecting rod **212** such that a rotational motion of the auxiliary crankshaft **208** is transformed into a reciprocatory motion of the auxiliary piston **202**.

In an implementation, the auxiliary crankshaft **208** of the fuel supply pump **136** obtains a drive from the crankshaft **106** of the engine **100**. In one embodiment, the auxiliary crankshaft **208** obtains the drive from the crankshaft **106** through a chain drive assembly (not shown in the figure). Similarly, other drive mechanisms may also be used to provide a drive to the auxiliary crankshaft **208**.

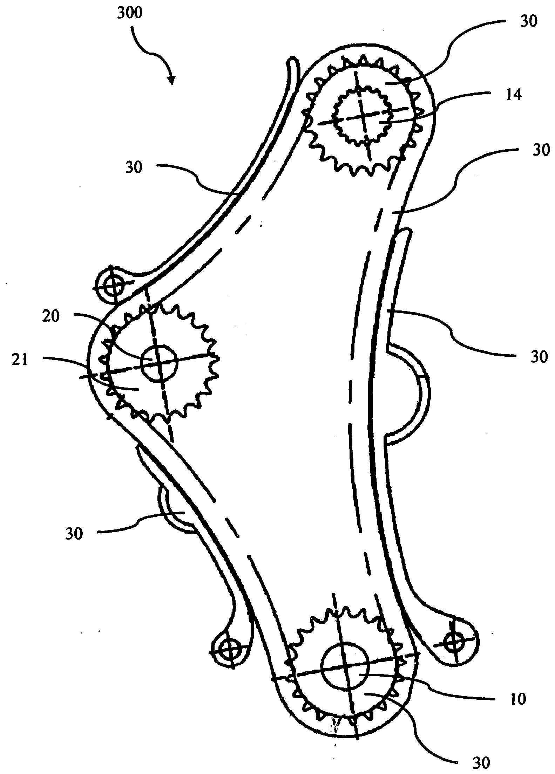

In case of a chain drive assembly providing the drive to the auxiliary crankshaft **208**, an end of the auxiliary crankshaft **208** has an auxiliary sprocket wheel **214** mounted and fixed thereon, as shown in **Fig. 2b**. The auxiliary sprocket wheel **214** is coupled to the sprocket wheel mounted on the crankshaft **106** of the engine **100** to achieve the drive. The mechanism of a chain drive assembly is explained in further detail in **Fig. 3****.**

Further, the fuel supply pump **136** includes an auxiliary cylinder head **216** mounted on the auxiliary cylinder block **206**. The auxiliary cylinder head **216** includes an auxiliary inlet port **218** and an auxiliary exhaust port **220**. In an embodiment, the auxiliary inlet port **218** is connected to a fuelling device (not shown in the figure), such as a carburettor or an electronic fuelling device, and receives the charge of fuel and air from the fuelling device through a charging valve **222**. In one example, the charging valve **222** is a reed valve, which allows a unidirectional flow of the charge from the fuelling device into the auxiliary bore **204** of the fuel supply pump **136** through the auxiliary inlet port **218**. In one implementation, a small quantity of the charge is received by the fuel supply pump **136** from the fuelling device. In said implementation, the charge is richer in composition as compared to the corresponding stoichiometric composition of the charge for an operation, for example, full load operation or part load operation, of the engine.

In another embodiment, the auxiliary bore **204** of the fuel supply pump **136** includes the auxiliary inlet port (not shown in the figure) connected to the fuelling device for the induction of charge. In said embodiment, the auxiliary inlet port is formed in the auxiliary cylinder block **206** slightly above the BDC position of the auxiliary piston **202** in the auxiliary bore **204**. The charge is inducted into the fuel supply pump **136** when the auxiliary piston **202** is approaching its BDC position. Hence, the reciprocating motion of the auxiliary piston **202** regulates the opening and closing of the auxiliary inlet port for the induction of charge.

The charge entering the auxiliary bore **204** is pressurized by the reciprocating motion of the auxiliary piston **202**. In one embodiment, the fuel supply pump **136** is a low-pressure pump. According to said embodiment, the fuel supply pump **136** pressurizes the charge to a pressure in the range of about 3 to 6 Bars. Further, the fuel supply pump **136** may have a compression ratio of about 3:1 to 5:1. The compression ratio may be understood as ratio of volume of auxiliary bore **204** when the auxiliary piston **202** is at a BDC position, to the volume of the auxiliary bore **204** when the auxiliary piston **202** is at a TDC position. In an embodiment, a volumetric capacity of the fuel supply pump **136** is about 10% to 30%a volumetric capacity of the engine **100**.

Further, the auxiliary exhaust port **220** provided in auxiliary cylinder head **216** is connected to the inlet passage **138** leading to the inlet port **130** of the engine **100**. In one embodiment, the auxiliary exhaust port **220** includes a discharge valve (not shown in the figure) to regulate the induction of pressurized charge from the fuel supply pump **136** into the inlet passage **138**. In an implementation, the discharge valve is a pressure-regulated check valve and is calibrated in such a way that it allows the pressurized charge to enter the inlet passage **138** when the pressure of the charge is above a predetermined value. In one example, the predetermined value of the pressure of the charge lies in the range of about 0 to 3 Bars. During the induction of charge from the fuelling device into the fuel supply pump and during the pressurization of charge, the discharge valve remains closed.

Furthermore, the fuel supply pump **136** is cooled by a fluid coolant flowing through a fluid passage **224** formed in the cylinder block **108** of the engine **100.** In **Fig. 2a****,** the flow of the coolant through the fluid passage **224** is depicted by arrows.

**Fig. 3** illustrates a chain drive assembly **300** of the engine **100**, according to an embodiment of the present subject matter. For this, a rear-end view of the engine **100** is depicted. In said embodiment, the chain drive assembly **300** includes a crankshaft sprocket wheel **302**, a camshaft sprocket wheel **304**, and the auxiliary sprocket wheel **214**. The crankshaft sprocket wheel **302**, the camshaft sprocket wheel **304**, and the auxiliary sprocket wheel **214** are mounted on the crankshaft **106**, the camshaft **146**, and the auxiliary crankshaft **208**, respectively. The crankshaft sprocket wheel **302**, the camshaft sprocket wheel **304**, and the auxiliary sprocket wheel **214** of the chain drive assembly **300** are coupled to each other by a chain **306**. In an embodiment, the chain **306** serves as a timing mechanism for the chain drive assembly **300**.

The crankshaft sprocket wheel **302** obtains its drive from the crankshaft **106**, which obtains its drive from the piston **112** reciprocating in the cylinder bore **110** as a result of the combustion of the charge in the auxiliary combustion chamber **132** and the main combustion chamber **126**. The crankshaft sprocket wheel **302** then transmits the drive, through the chain **306**, to the camshaft sprocket wheel **304** to drive the inlet valve **142** and the exhaust valve **144**, and to the auxiliary sprocket wheel **212** to drive the fuel supply pump **136**. In an embodiment, the crankshaft sprocket wheel **302** drives the camshaft sprocket wheel **304** and the auxiliary sprocket wheel **212** using the chain **306**. In another embodiment, the crankshaft sprocket wheel **302** provides the drive to the camshaft sprocket wheel **304** to actuate the inlet valve **142** and the exhaust valve **144**, and the camshaft sprocket wheel **304** further provides the drive to the auxiliary sprocket wheel **212** to drive the fuel supply pump **136**, using separate chains.

In one embodiment, the chain drive assembly **300** is a step-less chain drive assembly, that is, the crankshaft sprocket wheel **302**, the camshaft sprocket wheel **304**, and the auxiliary sprocket wheel **214** are coupled to each other through the chain **306** without any reduction in the drive ratio. This facilitates synchronization of the rotation of the crankshaft **106**, the opening and closing of the exhaust valve **142** and the inlet valve **144**, and the rotation of the auxiliary crankshaft **208** of the fuel supply pump **136**, for effective functioning of the engine **100**.

Further, the chain drive assembly **300** includes a plurality of chain tensioners **308**, collectively referred to as tensioners **308**. The tensioners **308** maintain proper tension in the chain **306** to reduce vibrations and noise generated by the chain **306** during operation. The tensioners **308** achieve a compensation for the wear that the chain **306** undergoes and, hence, avoids errors, such as tooth-skip, during the transmission of drive through the chain **306**. The tensioners **308** also help in reducing synchronization errors between the crankshaft sprocket wheel **302**, the camshaft sprocket wheel **304**, and the auxiliary sprocket wheel **214**, which may occur due to loss in tension of the chain **306**.

It may be understood that in other embodiments, the chain drive assembly **300** may include more than one chain **306** to separately drive the auxiliary crankshaft **208** and the camshaft **146**. Similarly, in other embodiments, the chain drive may include sprocket wheels other than the crankshaft sprocket wheel **302**, the camshaft sprocket wheel **304**, and the auxiliary sprocket wheel **214**.

The described subject matter and its equivalent thereof have many advantages, including those which are described below. The provision of the auxiliary combustion chamber **132** along with the main combustion chamber **126** in the engine **100** facilitates the stratification of charge in the combustion chambers **126**, **132**. As a result, the engine **100** is capable of operating on a substantially stoichiometric composition or on a lean composition of charge as compared to the stoichiometric composition. Such an operation of the engine **100** facilitates in the engine **100** in achieving high fuel economy and low pollutant emissions in the exhaust.

The pressure in the auxiliary combustion chamber **132** is less than the pressure in a main combustion chamber **126**, and hence the fuel supply pump **136** may be a low pressure pump. Such a pump is less susceptible to wear and tear and is durable. Further, the disintegration and atomization of fuel by the fuel supply pump **136** helps in substantially complete combustion of the fuel in the charge. This helps the engine **100** in achieving high fuel efficiency and low unburnt fuel in the exhaust.

Further, the provision of transfer ports **116** in the cylinder wall **118** and the exhaust port **128** and the exhaust valve **142** in the cylinder head **122** allows uniflow scavenging of the combustion products. The uniflow scavenging facilitates in effective removal of combustion products from the cylinder bore **110** and also prevents dilution of charge by combustion products, facilitating combustion of charge. The provision of the exhaust port **132** in the cylinder head **126** allows use of a piston **112** with small skirt length. The small skirt length reduces the contact surface of the piston **112** with a wall of the cylinder bore **110** and hence reduces the friction between the two. This ensures durability and longevity of the engine **100**. Further, the piston **112** with small skirt length has a small weight and therefore less inertia. Hence, the engine **100** expends less thrust of combustion in overcoming the inertia of the piston **112**.

## Claims

1. A two stroke internal combustion (IC) engine **(100)** comprising:
a cylinder head **(122),** wherein the cylinder head **(122)** comprises:
an auxiliary combustion chamber **(132)** to achieve at least partial combustion of a charge;
an inlet passage **(138)** through which the charge is to be inducted into the auxiliary combustion chamber **(132),** the inlet passage **(138)** being in substantial proximity of the auxiliary combustion chamber **(132);**
an inlet port **(130)** provided at the auxiliary combustion chamber **(132),** wherein the inlet passage **(138)** opens into the auxiliary combustion chamber **(132)** through the inlet port **(130);** and
an inlet valve **(144)** provided at the inlet port **(130)** to regulate an induction of the charge into the auxiliary combustion chamber **(132)** through the inlet passage **(138);** and
a cylinder block **(108)** having the cylinder head **(122)** mounted thereon, wherein the cylinder block **(108)** comprises a cylinder bore **(110)** having a piston **(112)** disposed therein;
a main combustion chamber **(126)** formed between the cylinder head **(122)** and the piston **(112),** wherein a volume of the main combustion chamber **(126)** is less than a volume of the auxiliary combustion chamber **(132);**
a fuel supply pump **(136)** in fluid communication with the auxiliary combustion chamber **(132)** through the inlet passage **(138)** to induct the charge into the auxiliary combustion chamber **(132).**

2. The two stroke IC engine **(100)** as claimed in claim 1, wherein the fuel supply pump **(136)** inducts a substantially rich composition of the charge into the auxiliary combustion chamber **(132).**

3. The two stroke IC engine **(100)** as claimed in claim 1, wherein the fuel supply pump **(136)** obtains a drive from a camshaft **(146).**

4. The two stroke IC engine **(100)** as claimed in claim 1, wherein the fuel supply pump **(136)** obtains a drive from a crankshaft **(106).**

5. The two stroke engine **(100)** as claimed in claim 4, wherein the fuel supply pump **(136)** obtains the drive from the crankshaft **(106)** through a chain drive assembly **(300).**

6. The two stroke engine **(100)** as claimed in claim 4, wherein the fuel supply pump **(136)** obtains the drive from the crankshaft **(106)** through a gear drive.

7. The two stroke IC engine **(100)** as claimed in claim 1, wherein the fuel supply pump **(136)** is a low pressure pump.

8. The two stroke IC engine **(100)** as claimed in claim 1, wherein the fuel supply pump **(136)** pressurizes the charge in a range of about 3 Bars to 6 Bars.

9. The two stroke IC engine **(100)** as claimed in claim 1, wherein the cylinder head **(122)** comprises a valve train assembly **(140),** and wherein the valve train assembly **(140)** obtains a drive from the crankshaft **(106).**

10. The two stroke IC engine **(100)** as claimed in claim 9, wherein the valve train assembly **(140)** obtains a drive from the crankshaft **(106)** through a chain drive assembly **(300).**

11. The two stroke IC engine **(100)** as claimed in claim 1, wherein the cylinder head **(122)** comprises:
an exhaust port **(128);** and
an exhaust valve **(142)** provided at the exhaust port **(128)** to regulate opening and closing of the exhaust port **(128)**.

12. The two stroke IC engine **(100)** as claimed in claim 11, wherein a diameter of the exhaust port **(128)** is greater than a diameter of an inlet port **(130)**.

13. The two stroke IC engine **(100**) as claimed in claim 11, wherein a ratio of a diameter of the exhaust port **(128)** and a diameter of an inlet port **(130)** is in a range of about 2:1 to 4:1.

14. The two stroke IC engine **(100)** as claimed in claim 1, wherein the cylinder block **(108)** comprises a plurality of transfer ports **(116)** provided annularly in a cylinder wall **(118)** to induct a scavenging medium into a cylinder bore **(110)** from a crankcase **(102)**.

## Patentansprüche

1. Zweitaktverbrennungsmotor (IC) (100) umfassend:
einen Zylinderkopf (122), wobei der der Zylinderkopf (122) umfasst:
einen zusätzlichen Brennraum (132), um zumindest eine teilweise Verbrennung der Ladung zu erreichen,
einen Einlasskanal (138), durch den die Ladung in den zusätzlichen Brennraum (132) eingespritzt wird, wobei sich der Einlasskanal (138) in unmittelbarer Nähe des zusätzlichen Brennraums (132) befindet,
eine Einlassöffnung (130) zu dem zusätzlichen Brennraum (132), wobei der Einlasskanal (138) in den zusätzlichen Brennraum (132) über die Einlassöffnung (130) mündet, und
ein Einlassventil (144) in der Einlassöffnung (130) zur Regulierung der Einspritzung der Ladung in den zusätzlichen Brennraum (132) durch den Einlasskanal (138), und
einen Zylinderblock (108), auf dem der Zylinderkopf (122) montiert ist, wobei der Zylinderblock (108) eine Zylinderbohrung (110) umfasst, in der ein Kolben (112) angeordnet ist,
einen Hauptbrennraum (126) zwischen dem Zylinderkopf (122) und dem Kolben (112), wobei eine Ladung des Hauptbrennraumes (126) kleiner ist als eine Ladung des zusätzlichen Brennraums (132),
eine Kraftstoffpumpe (136) die mit dem zusätzlichen Brennraum (132) über den Einlasskanal (138) in Fluidverbindung steht, um die Ladung in den zusätzlichen Brennraum (132) einzuspritzen.

2. Zweitaktverbrennungsmotor (100) nach Anspruch 1, wobei die Kraftstoffpumpe (136) eine im Wesentlichen fette Ladungszusammensetzung in den zusätzlichen Brennraum (132) einspritzt.

3. Zweitaktverbrennungsmotor (100) nach Anspruch 1, wobei die Kraftstoffpumpe (136) durch die Nockenwelle (146) angetrieben wird.

4. Zweitaktverbrennungsmotor (100) nach Anspruch 1, wobei die Kraftstoffpumpe (136) von der Kurbelwelle (106) angetrieben wird.

5. Zweitaktverbrennungsmotor (100) nach Anspruch 4, wobei die Kraftstoffpumpe (136) durch die Kurbelwelle (106) über eine Kettentriebbaugruppe (300) angetrieben wird.

6. Zweitaktverbrennungsmotor (100) nach Anspruch 4, wobei die Kraftstoffpumpe (136) durch die Kurbelwelle (106) über eine Getriebebaugruppe angetrieben wird.

7. Zweitaktverbrennungsmotor (100) nach Anspruch 1, wobei die Kraftstoffpumpe (136) eine Niederdruckpumpe ist.

8. Zweitaktverbrennungsmotor (100) nach Anspruch 1, wobei die Kraftstoffpumpe (136) die Ladung mit einem Druck von 3 bar bis 6 bar beaufschlagt

9. Zweitaktverbrennungsmotor (100) nach Anspruch 1, wobei der Zylinderkopf (122) eine Ventilantriebsbaugruppe (140) umfasst, und wobei die Ventilantriebsbaugruppe (140) durch die Kurbelwelle (106) angetrieben wird.

10. Zweitaktverbrennungsmotor (100) nach Anspruch 9, wobei die Ventilantriebsbaugruppe (140) durch die Kurbelwelle (106) über eine Kettentriebbaugruppe (300) angetrieben wird.

11. Zweitaktverbrennungsmotor (100) nach Anspruch 1, wobei der Zylinderkopf (122) umfasst:
eine Abgasöffnung (128), und
ein Abgasventil (142) in der Abgasöffnung (128), mit dem das Öffnen und Schließen der Abgasöffnung (128) reguliert wird.

12. Zweitaktverbrennungsmotor (100) nach Anspruch 11, wobei ein Durchmesser der Abgasöffnung (128) größer ist als ein Durchmesser einer Einlassöffnung (130).

13. Zweitaktverbrennungsmotor (100) nach Anspruch 11, wobei ein Verhältnis zwischen einem Durchmesser der Abgasöffnung (128) und einem Durchmesser einer Einlassöffnung (130) etwa 2:1 bis 4:1 beträgt.

14. Zweitaktverbrennungsmotor (100) nach Anspruch 1, wobei der Zylinderblock (108) mehrere Durchleitungsöffhungen (116) umfasst, die ringförmig in einer Zylinderwand (118) angebracht sind und zur Einspritzung eines Spülmediums in eine Zylinderbohrung (110) von einem Kurbelgehäuse (102) aus dienen.

## Revendications

1. Moteur (100) à combustion interne (IC) à deux temps comprenant :
une culasse de cylindre (122), dans lequel la culasse de cylindre (122) comprend :
une chambre de combustion auxiliaire (132) pour obtenir une combustion au moins partielle d'une charge ;
un passage d'entrée (138) à travers lequel la charge est destinée à être introduite dans la chambre de combustion auxiliaire (132), le passage d'entrée (138) étant sensiblement à proximité de la chambre de combustion auxiliaire (132) ;
un orifice d'entrée (130) prévu à la chambre de combustion auxiliaire (132), dans lequel le passage d'entrée (138) débouche dans la chambre de combustion auxiliaire (132) à travers l'orifice d'entrée (130) ; et
une soupape d'entrée (144) prévue à l'orifice d'entrée (130) pour réguler une introduction de la charge dans la chambre de combustion auxiliaire (132) à travers le passage d'entrée (138) ; et
un bloc cylindres (108) ayant la culasse de cylindre (122) montée sur celui-ci, dans lequel le bloc cylindres (108) comprend un alésage de cylindre (110) ayant un piston (112) disposé dans celui-ci ;
une chambre de combustion principale (126) formée entre la culasse de cylindre (122) et le piston (112), dans lequel un volume de la chambre de combustion principale (126) est inférieur à un volume de la chambre de combustion auxiliaire (132) ;
une pompe d'alimentation en carburant (136) en communication fluidique avec la chambre de combustion auxiliaire (132) par l'intermédiaire du passage d'entrée (138) pour introduire la charge dans la chambre de combustion auxiliaire (132).

2. Moteur (100) à IC à deux temps selon la revendication 1, dans lequel la pompe d'alimentation en carburant (136) introduit une composition sensiblement riche de la charge dans la chambre de combustion auxiliaire (132).

3. Moteur (100) à IC à deux temps selon la revendication 1, dans lequel la pompe d'alimentation en carburant (136) obtient un entraînement à partir d'un arbre à came (146).

4. Moteur (100) à IC à deux temps selon la revendication 1, dans lequel la pompe d'alimentation en carburant (136) obtient un entraînement à partir d'un vilebrequin (106).

5. Moteur (100) à deux temps selon la revendication 4, dans lequel la pompe d'alimentation en carburant (136) obtient l'entraînement à partir du vilebrequin (106) par l'intermédiaire d'un ensemble d'entraînement à chaîne (300).

6. Moteur (100) à deux temps selon la revendication 4, dans lequel la pompe d'alimentation en carburant (136) obtient l'entraînement à partir du vilebrequin (106) par l'intermédiaire d'un entraînement à engrenage.

7. Moteur (100) à IC à deux temps selon la revendication 1, dans lequel la pompe d'alimentation en carburant (136) est une pompe à basse pression.

8. Moteur (100) à IC à deux temps selon la revendication 1, dans lequel la pompe d'alimentation en carburant (136) met sous pression la charge dans une plage d'environ 3 bars à 6 bars.

9. Moteur (100) à IC à deux temps selon la revendication 1, dans lequel la culasse de cylindre (122) comprend un ensemble de commande de soupape (140), et dans lequel l'ensemble de commande de soupape (140) obtient un entraînement à partir du vilebrequin (106).

10. Moteur (100) à IC à deux temps selon la revendication 9, dans lequel l'ensemble de commande de soupape (140) obtient un entraînement à partir du vilebrequin (106) par l'intermédiaire d'un ensemble d'entraînement à chaîne (300).

11. Moteur (100) à IC à deux temps selon la revendication 1, dans lequel la culasse de cylindre (122) comprend :
un orifice d'échappement (128) ; et
une soupape d'échappement (142) prévue à l'orifice d'échappement (128) pour réguler l'ouverture et la fermeture de l'orifice d'échappement (128).

12. Moteur (100) à IC à deux temps selon la revendication 11, dans lequel un diamètre de l'orifice d'échappement (128) est supérieur à un diamètre d'un orifice d'entrée (130).

13. Moteur (100) à IC à deux temps selon la revendication 11, dans lequel un rapport d'un diamètre de l'orifice d'échappement (128) et d'un diamètre d'un orifice d'entrée (130) est dans une plage d'environ 2:1 à 4:1.

14. Moteur (100) à IC à deux temps selon la revendication 1, dans lequel le bloc cylindres (108) comprend une pluralité d'orifices de transfert (116) prévus de façon annulaire dans une paroi de cylindre (118) pour introduire un agent de balayage dans un alésage de cylindre (110) à partir d'un carter de moteur (102).
